(19) Europäisches Patentamt

European Patent Office

Office européen des brevets

(11) **EP 0 618 070 B1**

(12) **EUROPÄISCHE PATENTSCHRIFT**

(45) Veröffentlichungstag und Bekanntmachung des Hinweises auf die Patenterteilung:
**09.06.1999 Patentblatt 1999/23**

(51) Int. Cl.$^6$: **B32B 27/32**, B32B 27/20, B65D 65/40, C09J 7/02

(21) Anmeldenummer: **94104669.0**

(22) Anmeldetag: **24.03.1994**

(54) **Siegelfähige orientierte Polyolefin-Mehrschichtfolie, Verfahren zu ihrer Herstellung und ihre Verwendung**

Oriented sealable polyolefin multilayer film, process for its manufacture and its use

Film multicouche orienté thermosoudable en polyoléfine, procédé pour sa fabrication et son utilisation

(84) Benannte Vertragsstaaten:
**BE DE ES FR GB IT NL**

(30) Priorität: **01.04.1993 DE 4310684**

(43) Veröffentlichungstag der Anmeldung:
**05.10.1994 Patentblatt 1994/40**

(73) Patentinhaber:
**Hoechst Trespaphan GmbH**
**66539 Neunkirchen (DE)**

(72) Erfinder:
• **Peiffer, Herbert, Dr.**
  **D-55126 Mainz (DE)**
• **Murschall, Ursula, Dr.**
  **D-55283 Nierstein (DE)**

• **Schlögl, Gunter, Dr.**
  **D-65779 Kelkheim (DE)**

(74) Vertreter:
**Luderschmidt, Schüler & Partner GbR**
**Patentanwälte,**
**Postfach 3929**
**65029 Wiesbaden (DE)**

(56) Entgegenhaltungen:
**EP-A- 0 411 968         EP-A- 0 468 333**
**EP-A- 0 615 839         US-A- 4 590 125**
**US-A- 4 711 673         US-A- 4 956 232**

• **DATABASE WPI Week 8144, Derwent**
  **Publications Ltd., London, GB; AN 81-80575D &**
  **JP-A-56 118 444 (MITSUBISHI MONSANTO KK)**
  **17. September 1981**

## Beschreibung

Die Erfindung betrifft eine orientierte, siegelfähige Polyolefin-Mehrschichtfolie, umfassend eine Basisschicht, die Polypropylen und Harz enthält, und mindestens eine siegelfähige Deckschicht. Die Folien zeichnen sich durch ausgezeichnete Siegeleigenschaften und hervorragende Laufeigenschaften auf schnellen Verpackungsmaschinen aus.

Die Anforderungen an die Verarbeitungsfähigkeit der Folien und deren Lauffähigkeit auf automatischen Maschinen sind im Laufe der Jahre ständig gestiegen. Heutige Vepackungsautomaten, wie sie beispielsweise in der Zigarettenindustrie verwendet werden, arbeiten mit Taktzahlen von 350 bis 450 Einschlägen pro Minute. Folien, die auf solchen Maschinen laufen, erfordern äußerst sorgfältig aufeinander abgestimmte Eigenschaften, wobei häufig das Problem auftritt, daß die Optimierung eines Parameters eine andere Eigenschaft in nicht akzeptabler Weise beeinträchtigt.

Im Stand der Technik sind Folien bekannt, welche durch eine abgestimmte synergistisch wirkende Rezepturierung gute Laufeigenschaften aufweisen.

Die EP-A-0 468 333 beschreibt eine mehrschichtige Polypropylenfolie mit verbesserten Barriereeigenschaften, deren Basisschicht ein Kohlenwasserstoffharz mit einem Erweichungspunkt von größer oder gleich 140 °C enthält. Die Mehrschichtfolie hat eine Deckschicht aus Propylenco- oder -terpolymeren. Die Basisschicht und/oder die Deckschicht enthält/enthalten ein Antiblockmittel und/oder Gleitmittel. Die Folien sind bezüglich ihres Warmblockverhaltens stark verbesserungsbedürftig.

Die EP-A-0 182 463 beschreibt eine mehrschichtige Folie, welche 0,05 bis 0,2 Gew.-% tertiäres aliphatisches Amin in der Basisschicht und eine Kombination von Silikonöl und $SiO_2$ in der siegelfähigen Deckschicht enthält. Nach der Beschreibung erhält man durch das überraschende Zusammenwirken von $SiO_2$, Silikonöl und Amin in Verbindung mit einer ausgewählten Deckschichtdicke von kleiner als 0,8 $\mu$m Folien mit Reibungskoeffizienten von 0,3 und kleiner. Dieser Folie haftet der Nachteil an, daß man in der Deckschichtdicke nicht über 0,8 $\mu$m gehen darf, da sonst die Laufeigenschaften stark beeinträchtigt werden.

Die EP-A-0 143 130 offenbart Folien, die ein Carbonsäureamid in der Basisschicht und ebenfalls die Kombination von Silikonöl und $SiO_2$ in der Deckschicht enthalten. Ähnlich wie in der oben erwähnten EP-A-0 182 463 wird eine synergistische Wirkung der drei ausgewählten Komponenten auf den Reibungskoeffizienten beschrieben. Diese Folien sind trotz ihrer vorteilhaften Gleitfähigkeit mangelhaft bezüglich ihres Warmblockverhaltens.

Die EP-A-0 194 588 und EP-A-0 217 598 beschreiben analoge Folien, bei welchen nur in eine Deckschicht Silikonöl, gegebenenfalls in Kombination mit $SiO_2$, eingearbeitet wird. Die zweite silikonölfreie Deckschicht wird zur Verbesserung der Bedruckbarkeit coronabehandelt. Anschliessend erfolgt die Übertragung von Silikonöl auf die Oberfläche dieser behandelten zweiten Deckschicht durch Kontakt mit der silikonölhaltigen ersten Deckschicht. Durch diesen Kunstgriff erhält man eine mit Silikonöl ausgerüstete Folie mit guten Gleiteigenschaften, die gleichzeitig auf der coronabehandelten Seite gut bedruckbar und dennoch siegelfähig ist.

Die EF-A-0 468 333 beschreibt eine mehrschichtige Polypropylenfolie mit verbesserten Barriereeigenschaften, deren Basisschicht ein Kohlenwasserstoffharz mit einem Erweichungspunkt von größer oder gleich 140 °C enthält. Die Mehrschichtfolie hat eine Deckschicht aus Propylenco- oder -terpolymeren. Die Basisschicht und/oder die Deckschicht enthält/enthalten ein Antiblockmittel und/oder Gleitmittel. Die Folien sind bezüglich ihres Warmblockverhaltens stark verbesserungsbedürftig.

Die Folien nach dem Stand der Technik sind alle verbesserungsbedürftig im Hinblick auf ihre Laufeigenschaften, ihre Siegeleigenschaften und ihr Warmblockverhalten. Es besteht ein generelles Bedürfnis in der Verpackungsindustrie, die Kosten für die Verpackung so gering wie möglich zu halten. Aus diesem Grund versucht man stets, die Maschinen mit maximaler Geschwindigkeit laufen zu lassen, da damit wesentliche ökonomische Vorteile verbunden sind. Ein wichtiger begrenzender Faktor für die maximale Taktzahl ist die Folie mit ihren Eigenschaften.

Der vorliegenden Erfindung liegt somit die Aufgabe zugrunde, siegelfähige Folien zur Verfügung zu stellen, welche schnell, störungsfrei und energiesparend auf den automatischen Verpackungsmaschinen laufen sollen, wobei gleichzeitig die Qualität der Verpackung nicht beeinträchtigt werden darf. Zusätzlich soll die Folie sehr gute Barriereeigenschaften gegenüber Wasserdampf, Sauerstoff und Aromastoffen aufweisen, wobei die guten Lauf- und Siegeleigenschaften der Folie nicht beeinträchtigt werden dürfen.

Erfindungsgemäß wird diese Aufgabe gelöst durch eine Folie der eingangs genannten Gattung, deren kennzeichnende Merkmale darin bestehen, daß die siegelfähige Deckschicht ein Propylencopolymer und/oder ein Propylenterpolymer und ein Antiblockmittel mit einem mittleren Teilchendurchmesser von 3 bis 5 $\mu$m in einer Menge von 0,05 bis 0,4 Gew.-%, bezogen auf die Deckschicht, und ein Antiblockmittel mit einem mittleren Teilchendurchmesser von 1 bis 2,5 $\mu$m in einer Menge von 0,05 bis 0,4 Gew.-%, bezogen auf die Deckschicht, enthält

Die Basisschicht der erfindungsgemäßen Mehrschichtfolie besteht im wesentlichen aus einem Propylenpolymer und gegebenenfalls zugesetzten Additiven in jeweils wirksamen Mengen. Das Propylenpolymere enthält zum überwiegenden Teil (mindestens 90 %) Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 5 Gew.-% oder weniger, Copolymere von Propylen mit $C_4$-$C_8$-$\alpha$-Olefinen mit einem $\alpha$-Olefingehalt von 5 Gew.-% oder weniger stellen bevorzugte Propylenpolymere für die Basisschicht dar, wobei isotaktisches Polypropylen besonders bevorzugt ist. Das Propylenpolymere der Basisschicht hat im allgemeinen einen Schmelzflußindex von 0,5 g/10 min bis 10 g/10 min, vorzugsweise 1,5 g/10 min bis 4 g/10 min, bei 230 °C und einer Kraft von 21,6 N (DIN 53 735). Die angegebenen Gewichtsprozente beziehen sich auf das jeweilige Copolymer.

Gegebenenfalls kann das in der Basisschicht eingesetzte Propylenpolymere durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ =    Schmelzflußindex des Propylenpolymeren vor dem Zusatz des organischen Peroxids

$MFI_2$ =    Schmelzflußindex des peroxidisch abgebauten Propylenpolymeren

Im allgemeinen liegt der Abbaufaktor A des für die Basisschicht eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die Üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die Basisschicht der erfindungsgemäßen Folie enthält ein Harz, im allgemeinen in einer Menge von 1 bis 30 Gew.-%, vorzugsweise 3 bis 20 Gew.-%, insbesondere 5 bis 15 Gew.-%, bezogen auf das Gewicht der Basisschicht. Als Harze sind niedermolekulare Harze, insbesondere Kohlenwasserstoffharze, bevorzugt. Die Kohlenwasserstoffharze können teilweise oder vollständig hydriert sein. Als Harze kommen grundsätzlich synthetische Harze oder Harze natürlichen Ursprungs in Frage. Es hat sich als besonders vorteilhaft erwiesen, Harze mit einem Erweichungspunkt von $\geq$140 °C (gemessen nach DIN 1995-U4 bzw. ASTM E-28) einzusetzen, wobei solche mit einem Erweichungspunkt von 140 bis 180 °C bevorzugt sind.

Unter den zahlreichen Harzen sind Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, $\alpha$-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 100 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 140 °C und darüber, vorzugsweise von 140 - 160°C, in der Basisschicht eingesetzt.

Die Mehrschichtfolie ist erfindungsgemäß mit mindestens einer Deckschicht versehen, welche ein siegelfähiges Propylencopolymer und/oder Propylenterpolymer und eine Mischung aus Antiblockmitteln enthält.

Im Rahmen der vorliegenden Erfindung sind als Propylencopolymere statistische Ethylen-Propylen-Copolymere besonders geeignet. Der Ethylengehalt der Copolymeren liegt im allgemeinen in einem Bereich von 3 bis 7 Gew.-

%, bevorzugt im Bereich von 3,5 bis 5 Gew.-%. Copolymere mit einem Schmelzflußindex (gemessen nach DIN 53 735 bei 230 °C, 21,6 N Belastung) im Bereich von 1 bis 15 g/10 min, vorzugsweise 4 bis 10 g/10 min, und einem Schmelzpunkt (gemes-sen nach DSC) im Bereich von 130 bis 145 °C, vorzugsweise 135 bis 140 °C, sind besonders vorteilhaft.

Als Propylenterpolymere sind $C_2/C_3/C_4$-Terpolymere besonders geeignet. Die $C_2/C_3/C_4$-Terpolymeren haben im allgemeinen einen Ethylengehalt von 2 bis 5 Gew.-%, vorzugsweise 3,5 bis 4,5 Gew.-%, einen Butylengehalt von 5 bis 10 Gew.-%, vorzugsweise 6 bis 8 Gew.-%, und einen entsprechenden Propylengehalt von 85 bis 93 Gew.-%. Der Schmelzflußindex des Terpolymeren liegt im allgemeinen im Bereich von 1 bis 15 g/10 min, vorzugsweise im Bereich von 5 bis 10 g/10 min. Der Schmelzpunkt (DSC) liegt im Bereich von 130 bis 140 °C und beträgt vorzugsweise etwa 135 °C.

Sämtliche Angaben in Gewichtsprozent bezüglich der vorstehend beschriebenen Co- und Terpolymeren beziehen sich auf das jeweilige Co- bzw. Terpolymer.

Es wurde gefunden, daß Ausführungsformen der Erfindung mit einer Siegelanspringtemperatur im Bereich von 100 bis 115 °C ganz besonders vorteilhaft sind. Überraschenderweise läßt sich eine solche Siegelanspringtemperatur innerhalb dieses engen Bereichs von 100 bis 115 °C mit einer Mischung aus den vorstehend beschriebenen Co- und Terpolymeren realisieren. Es wurde gefunden, daß das Harz, welches in die Basisschicht der Folie eingearbeitet ist, teilweise in die Deckschicht migriert und die Siegelanspringtemperatur gegenüber solchen Folien, die keine harzhaltige Basisschicht haben, herabsetzt. Dennoch läßt sich die Siegelanspringtemperatur mit der Deckschichtmischung aus Co-und Terpolymeren sehr genau auf den Bereich von 100 bis 115 °C einstellen. Der Gehalt an Co- und Terpolymeren in der Mischung kann innerhalb weiter Grenzen variieren. Die Zusammensetzung wird jedoch vorteilhafterweise so gewählt, daß der $C_2$-Gehalt der Mischung in einem Bereich von 2 bis 5 Gew.-%, vorzugsweise 3 bis 4 Gew.-%, der $C_3$-Gehalt der Mischung in einem Bereich von 85 bis 96 Gew.-%, vorzugsweise 88 bis 94 Gew.-%, und der $C_4$-Gehalt der Mischung in einem Bereich von 2 bis 8 Gew.-%, vorzugsweise 4 bis 6 Gew.-%, liegen. Der Copolymeranteil in der Mischung beträgt in der Regel 20 bis 80 Gew.-%, vorzugsweise 30 bis 60 Gew.-%, insbesondere 45 bis 55 Gew.-%. Der Terpolymeranteil in der Mischung beträgt normalerweise 20 bis 80 Gew.-%, vorzugsweise 40 bis 70 Gew.-%, insbesondere 45 bis 55 Gew.-%.

Alle Angaben in Gewichtsprozent bezüglich der vorstehend beschriebenen Mischung aus Copolymer und Terpolymer beziehen sich auf die Mischung.

Unter einer Mischung im Sinne der Erfindung wird sowohl eine mechanische Mischung als auch ein Blend aus den einzelnen Komponenten verstanden, wobei sich mechanische Mischungen als vorteilhaft erwiesen haben und bevorzugt sind. Mechanische Mischungen eröffnen bei der Folienherstellung wesentlich mehr Möglichkeiten, die Zusammensetzung der Deckschicht zu optimieren. Ein Blend wird in der Regel vom Folienhersteller als Rohstoff mit einer festgelegten Zusammensetzung bezogen, welche vom Folienhersteller selbst nicht ohne weiteres geändert werden kann.

Auch die vorstehend beschriebenen Deckschichtpolymeren können in analoger Weise, wie vorne für die Basisschicht beschrieben, peroxidisch abgebaut werden. Dabei werden grundsätzlich die gleichen Peroxide wie vorstehend beschrieben für den Abbau verwendet. Der Abbaufaktor A der Deckschichtpolymeren liegt im allgemeinen im Bereich von 3 bis 15, vorzugsweise 6 bis 10.

Es ist erfindungswesentlich, daß das Polymere bzw. die Polymermischung der Deckschicht eine Kombination aus zwei bezüglich ihrer Größe verschiedenen Antiblockmitteln enthält. Als Antiblockmittel kommen die üblicherweise verwendeten Substanzen wie $SiO_2$, Silikate, Diatomerde, Kreide, $CaCO_3$, $TiO_2$ usw. in Frage. $SiO_2$ hat sich als besonders vorteilhaft erwiesen. $SiO_2$ wird im allgemeinen durch Mahlung von Silica-Gel hergestellt und ist eine synthetisch hergestellte hochporöse, reine Kieselsäure, welche eine völlig amorphe Struktur im Gegensatz zu kristallinen Kieselsäuren aufweist. Der $SiO_2$-Gehalt liegt im allgemeinen über 95 %, insbesondere im Bereich von 98 bis 99,5 %.

Das erste, grobkörnige Antiblockmittel hat einen mittleren Teilchendurchmesser von 3 bis 5 μm, vorzugsweise 3,5 bis 4,5 μm, wobei insbesondere $SiO_2$ dieser Teilchengröße bevorzugt ist.

In einer besonders vorteilhaften Ausführungsform sind die $SiO_2$-Teilchen mit einem mittleren Teilchendurchmesser von 3 bis 5 μm organisch nachbehandelt und weisen eine Beschichtung auf, welche 0,5 bis 5 % einer aliphatischen Carbonsäure enthält. Als aliphatische Carbonsäuren sind aliphatische Hydroxydi-und -tricarbonsäuren oder Stearinsäure bevorzugt. Im allgemeinen weisen die Säuren zwei bis fünf, bevorzugt zwei bis drei, Hydroxygruppen auf. Als aliphatische Carbonsäuren sind Tartronsäure (Hydroxymalonsäure), Äpfelsäure (Monohydroxybernsteinsäure), Weinsäure (Dihydroxybernsteinsäure) und Citronensäure bevorzugt. Als ganz besonders vorteilhaft haben sich citronensäurehaltige Beschichtungen erwiesen. Aufgrund der organischen Beschichtung reagieren die grobkörnigen $SiO_2$-Teilchen in wäßrigen Lösungen leicht sauer. Der pH-Wert einer 5%igen wäßrigen Suspension liegt in einem Bereich von 3 bis 5, bevorzugt beträgt er 4.

Der Gehalt an grobkörnigem Antiblockmittel, insbesondere des $SiO_2$, liegt im Bereich von 0,05 bis 0,4 Gew.-%, vorzugsweise 0,1 bis 0,25 Gew.-%, bezogen auf die Deckschicht.

Das zweite, feinkörnige Antiblockmittel hat einen mittleren Teilchendurchmesser von 1 bis 2,5 μm, vorzugsweise etwa 2 μm. Als feinkörniges Antiblockmittel ist ebenfalls $SiO_2$ bevorzugt, wobei dieses im allgemeinen ohne organische Nachbehandlung eingesetzt wird. Der Gehalt in der Deckschicht beträgt 0,05 bis 0,4 Gew.-%, vorzugsweise 0,1 bis 0,25 Gew.-%.

Weiterhin enthält die Deckschicht in einer bevorzugten Ausführungsform zusätzlich Silikonöl im allgemeinen in einer Menge von 0,3 bis 3 Gew.-%, bezogen auf die Deckschicht. Die Viskosität des Silikonöls beträgt in der Regel 20 000 bis 3 000 000 $mm^2$/s, vorzugsweise 20 000 bis 1 000 000 $mm^2$/s. Als Silikonöle sind Polydialkylsiloxane bevorzugt, insbesondere solche mit Alkylresten, die 1 bis 6 C-Atome aufweisen. Ganz besonders vorteilhaft ist Polydimethylsiloxan, insbesondere in einer Menge von 0,5 bis 3 Gew.-%, bezogen auf die Deckschicht, und mit einer Viskosität von 20 000 bis 1 000 000 $mm^2$/s.

Die erfindungsgemäße Mehrschichtfolie umfaßt zumindest die vorstehend beschriebene Basisschicht und mindestens eine Deckschicht, welche die vorstehend beschriebenen Polymeren oder Mischungen daraus und die erfindungsgemäße Antiblockmittelmischung enthält. Je nach ihrem vorgesehenen Verwendungszweck kann die Mehrschichtfolie eine weitere Deckschicht auf der gegenüberliegenden Seite aufweisen. In einer bevorzugten Ausführungsform ist die Mehrschichtfolie dreischichtig, wobei gleiche oder verschiedene Deckschichten aufgebracht sein können. Folien mit identisch zusammengesetzten Deckschichten sind bevorzugt.

Die Dicke der Deckschicht/en ist größer als 0,2 μm und liegt vorzugsweise im Bereich von 0,4 bis 3 μm, insbesondere 0,4 bis 2 μm, wobei beidseitige Deckschichten gleich oder verschieden dick sein können.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 70 μm, insbesondere 10 bis 50 μm, wobei die Basisschicht etwa 50 bis 95 % der Gesamtfoliendicke ausmacht.

Neben den ausgewählten Additiven für die Deckschicht/en kann die erfindungsgemäße Mehrschichtfolie zusätzlich Neutralisationsmittel, Antistatika und Stabilisatoren enthalten.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat, Dihydrotalcit und/oder Calciumcarbonat einer mittleren Teilchengröße von höchstens 0,7 μm, einer absoluten Teilchengröße von kleiner 10 μm und einer spezifischen Oberfläche von mindestens 40 $m^2$/g.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 3 Gew.-%. Als Antistatikum ist weiterhin Glycerinmonostearat bevorzugt.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 7:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 10 bis 110 °C, vorzugsweise 20 bis 60 °C, zu halten.

Die Temperaturen, bei denen Längs- und Querstreckung durchgeführt werden, können variieren. Im allgemeinen wird die Längsstreckung vorzugsweise bei 100 bis 150 °C und die Querstreckung vorzugsweise bei 140 bis 190 °C.

Gegebenenfalls kann/können wie oben erwähnt nach der biaxialen Streckung eine oder beide Oberfläche/n der Folie nach einer der bekannten Methoden corona- oder flammbehandelt werden. Dabei ist zu beachten, daß nur solche Deckschichten entsprechend behandelt werden, die silikonölfrei sind. Die Corona-oder Flammbehandlung einer siegelfähigen silikonölhaltigen Deckschicht zerstört oder verschlechtert deren Siegelfähigkeit.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 200 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Es wurde gefunden, daß die harzhaltigen Folien, deren Deckschicht/en mit der erfindungsgemäßen Antiblockmittelkombination ausgerüstet sind, im Hinblick auf ihre Lauf- und Siegeleigenschaften wesentlich verbessert sind. Überraschenderweise erzielt man deutlich verbesserte Siegelnahtfestigkeiten. Insbesondere konnten die Ergebnisse der Kurzzeitsiegelungen deutlich verbessert werden. Kurzzeitsiegelungen werden mit einer verkürzten Siegelzeit und einem verringerten Anpreßdruck durchgeführt. Überraschenderweise erhält man unter diesen Bedingungen Siegelnahtfestigkeiten, welche mit den Festigkeiten, die unter üblichen Bedingungen (130 °C, Siegelzeit 0,5 s, Siegeldruck 10 $N/mm^2$) erzielt werden, durchaus vergleichbar sind. Dies ermöglicht, die Taktzahl der Verpakungsmaschinen zu erhöhen. Im allgemeinen liegen die Siegelnahtfestigkeiten (gemessen bei 140 °C, 0,35 $N/cm^2$ und 0,15 s) über 1,2 N/15 mm, vorzugsweise im Bereich von 1,5 bis 2,5 N/15 mm. Überraschenderweise zeigen die erfindungsgemäßen Folien trotz harzhaltiger Basisschicht sehr gute Warmblockwerte. Das Warmblockverhalten ist ein wichtiges Qualitätsmerkmal der Folienverpackung, da verblockende Zigarettenpackungen bei erhöhten Temperaturen, wie sie in Zigarettenautomaten auftreten können, aneinanderkleben und nicht mehr aus dem Automaten entnommen werden können. Im allgemeinen liegen die Warmblockwerte der Folien in einem Bereich von 1 bis 10 N, vorzugsweise im Bereich von 1 bis 6 N, insbesondere 2 bis 8N.

Die erfindungsgemäße Folie zeichnet sich zusätzlich durch hervorragende Barriereeigenschaften, insbesondere gegenüber Wasserdampf, Sauerstoff und Aromastoffen, aus. Dabei konnten nachteilige Auswirkungen durch den Harzzusatz wie beispielsweise hohe Warmblockwerte, welche bei herkömmlichen Folien zugunsten der verbesserten Barriere in Kauf genommen werden mußten, ausgeglichen werden. Somit kann überraschenderweise eine Folie zur Verfügung gestellt werden, welche gleichzeitig bezüglich mehrerer Eigenschaften verbessert ist, die bisher an einer Folie nicht zusammen realisiert werden konnten.

Der Einsatz der bevorzugten Harze mit einem Erweichungspunkt von $\geqq$140 °C hat sich als besonders vorteilhaft bezüglich der optischen Eigenschaften und des Schrumpfverhaltens der Folien erwiesen. Darüber hinaus kommt es mit diesen Harzen zu keinen bzw. weniger Ablagerungen an den Walzen bei der Folienherstellung.

Weiterhin wurde gefunden, daß Folien, welche in der/den Deckschicht/en die erfindungsgemäße Antiblockmittelkombination enthalten und gleichzeitig eine Siegelanspringtemperatur von 100 bis 115 °C aufweisen, ganz besondere Vorteile als Verpackungsfolien auf schnellaufenden Verpackungsmaschinen aufweisen. Die Erniedrigung der Siegelanspringtemperatur ermöglicht zum einen eine weitere Steigerung der Laufgeschwindigkeit, da man bei gleichbleibender Temperatur eine wesentlich kürzere Siegelzeit benötigt als bei Folien nach dem Stand der Technik. Zum anderen ist es aber auch möglich, die Temperatur in der Siegelzone zu erniedrigen, wodurch erhebliche Energieeinsparungen möglich sind. Es wurde gefunden, daß bei einer Reduktion der Siegelanspringtemperatur auf einen Bereich von 100 bis 115 °C nur dann gute Siegelnahtfestigkeiten, insbesondere bei Kurzzeitsiegelungen, erzielt werden, wenn die Deckschicht die erfindungsgemäße Kombination aus grobkörnigem und feinkörnigem Antiblockmittel enthält.

Die Gleitreibung der Folie ist im Hinblick auf einen guten Einschlag optimiert und liegt im allgemeinen im Bereich von 0,2 bis 0,35. Zu glatte Folien führen zu einem blusigen Einschlag, zu stumpfe Folien neigen zum Verblok-

ken und führen zu Zipfelbildungen an der Stirnseite. Es wurde gefunden, daß der optimale Bereich des Gleitreibungskoeffizienten zwischen 0,2 und 0,35 ein störungsfreies Laufverhalten gewährleistet.

Damit stellt die Ausführungsform der erfindungsgemäßen Folie mit einer ausgewählten Siegelanspringtemperatur von 100 bis 115 °C eine gegenüber dem Stand der Technik ganz besonders verbesserte Folie dar, welche insbesondere als Zigaretteneinschlagfolie hervorragend geeignet ist.

Zusammenfassend ist festzustellen, daß die erfindungsgemäße Folie eine besonders vorteilhafte Auswahl von verbesserten Eigenschaften bietet, im einzelnen

- hervorragende Siegelnahtfestigkeit, insbesondere bei Kurzzeitsiegelungen
- sehr gute Warmblockwerte
- ausgezeichnetes Laufverhalten auf schnellaufenden Maschinen
- optimierte Gleitreibungswerte
- enger Zigaretteneinschlag
- ausgezeichnete Barriereeigenschaften

Die Erfindung wird nun anhand von Ausführungsbeispielen noch näher erläutert.

**Beispiel 1**

Es wurde durch Coextrusion und anschließende stufenweise Orientierung in Längs- und Querrichtung eine dreischichtige Folie mit einer Gesamtdicke von 20 $\mu$m und einem Schichtaufbau ABA hergestellt, d. h. die Basisschicht B war von zwei gleichen Deckschichten A umgeben. Die Deckschichten hatten eine Dicke von jeweils 0,7 $\mu$m.

Alle Schichten enthielten zur Stabilisierung 0,13 Gew.-% Pentaerythrityl-Tetrakis-4-(3,5-ditertiärbutyl-4-hydroxyphenyl)-propionat ($^{®}$Irganox 1010) und als Neutralisationsmittel 0,06 Gew.-% Calciumstearat.

Die Basisschicht B bestand im wesentlichen aus einem Propylenhomopolymeren mit einem Zusatz von 10 Gew.-% Harz, bezogen auf die Basisschicht. Das Propylenhomopolymere hatte einen n-heptanlöslichen Anteil von 4 Gew.-% und einen Schmelzpunkt von 160 bis 162 °C. Der Schmelzflußindex betrug 3,2 g/10 min bei 230 °C und 21,6 N Belastung (DIN 53 735). Das Harz hatte einen Erweichungspunkt von 140 °C und wurde unter dem Handelsnamen $^{®}$ESCOREZ ECR 356 von der Firma Exxon, Darien, Conneticut, USA, bezogen.

Die polyolefinischen Deckschichten bestanden im wesentlichen aus einer Mischung aus 50 Gew.-% eines statistischen Ethylen-Propylen-Copolymeren mit einem Gehalt von 4 Gew.-% Ethylen und aus 50 Gew.-% eines Ethylen-Propylen-Buten-1-Terpolymeren mit einem Gehalt von 3 Gew.-% Ethylen und 8 Gew.-% Buten-1, so daß die Deckschichtmischung einen Ethylengehalt von 3,5 Gew.-%, einen Propylengehalt von 92,5 Gew.-% und einen Buten-1-Gehalt von 4 Gew.-% aufwies.

Die polyolefinischen Deckschichten enthielten jeweils 0,9 Gew.-% eines Polydimethylsiloxans mit einer Viskosität von 30 000 mm$^2$/s, 0,17 Gew.-% eines organisch nachbehandelten Siliciumdioxids mit einem mittleren Teilchendurchmesser von 4 $\mu$m und 0,17 Gew.-% eines nicht organisch nachbehandelten Siliciumdioxids mit einem mittleren Teilchendurchmesser von 2 $\mu$m.

**Beispiel 2**

Beispiel 1 wurde wiederholt. Die Folie hatte keinen ABA-Aufbau, sondern einen ABC-Aufbau, d. h. die Basisschicht B war von unterschiedlichen Deckschichten A und C umgeben. Die Deckschicht A war identisch mit den Deckschichten A aus Beispiel 1, enthielt aber kein Polydimethylsiloxan. Die Deckschicht C war identisch mit den Deckschichten A aus Beispiel 1, enthielt aber 1,8 Gew.-% Polydimethylsiloxan mit einer Viskosität von 30 000 mm$^2$/s.

**Beispiel 3**

Beispiel 1 wurde wiederholt. Die Folie hatte wie in Beispiel 1 einen ABA-Aufbau. Die polyolefinischen Deckschichten bestanden im wesentlichen aus einer Mischung aus 30 Gew.-% eines statistischen Ethylen-Propylen-Copolymeren mit einem Gehalt von 4 Gew.-% Ethylen und aus 70 Gew.-% eines Ethylen-Propylen-Buten-1-Terpolymeren mit einem Gehalt von 3 Gew.-% Ethylen und einem Gehalt von 8 Gew.-% Buten-1, so daß die Deckschichtmischung einen Ethylengehalt von 3,3 Gew.-%, einen Propylen-Gehalt von 91,1 Gew.-% und einen Buten-1-Gehalt von 5,6 Gew.-% enthielt.

**Beispiel 4**

Beispiel 3 wurde wiederholt. Die polyolefinischen Deckschichten enthielten 1,0 Gew.-% eines Polydimethylsiloxans mit einer Viskosität von 30 000 mm$^2$/s, 0,20 Gew.-% eines organisch nachbehandelten Siliciumdioxids mit einem mittleren Teilchendurchmesser von 4 µm und 0,14 Gew.-% eines nicht organisch nachbehandelten Siliciumdioxids mit einem mittleren Teilchendurchmesser von 2µm.

**Beispiel 5**

Beispiel 1 wurde wiederholt. Die polyolefinischen Deckschichten bestanden im wesentlichen aus einer Mischung aus 40 Gew.-% eines statistischen Ethylen-Propylen-Copolymeren mit einem Gehalt von 4 Gew.-% Ethylen und aus 60 Gew.-% eines Ethylen-Propylen-Buten-1-Terpolymeren mit einem Gehalt von 4 Gew.-% Ethylen und 6 Gew.-% Buten-1, so daß die Deckschichtmischung einen Ethylengehalt von 4 Gew.-%, einen Propylengehalt von 92,4 Gew.-% und einen Buten-1-Gehalt von 3,6 Gew.-% enthielt.

**Vergleichsbeispiel 1**

Beispiel 1 wurde wiederholt. Die polyolefinischen Deckschichten enthielten jeweils 0,9 Gew.-% eines Polydimethylsiloxans mit einer Viskosität von 30 000 mm$^2$/s und 0,17 Gew.-% eines nicht organisch nachbehandelten Siliciumdioxids mit einem mittleren Teilchendurchmesser von 2 µm.

**Vergleichsbeispiel 2**

Vergleichsbeispiel 1 wurde wiederholt. Die polyolefinischen Deckschichten enthielten jeweils 0,9 Gew.-% eines Polydimethylsiloxans mit einer Viskosität von 30 000 mm$^2$/s und 0,34 Gew.-% eines nicht organisch nachbehandelten Siliciumdioxids mit einem mittleren Teilchendurchmesser von 2 µm.

**Vergleichsbeispiel 3**

Beispiel 1 wurde wiederholt. Die polyolefinischen Deckschichten enthielten jeweils 0,9 Gew.-% eines Polydimethylsiloxans mit einer Viskosität von 30 000 mm$^2$/s und 0,34 Gew.-% des organisch nachbehandelten Siliciumdioxids mit einem mittleren Teilchendurchmesser von 4 µm.

Die Eigenschaften der Folien gemäß den Beispielen und Vergleichsbeispielen sind in der nachstehenden Tabelle zusammengestellt.

Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C bzw. bei 50 N Belastung und 190 °C gemessen.

Schmelzpunkt

DSC-Messung, Maximum der Schmelzkurve, Aufheizgeschwindigkeit 20 °C/min.

Erweichungspunkt

Der Erweichungspunkt der Harze wird nach DIN 1995-U4 bzw. ASTM E-28 bestimmt.

Trübung

Die Trübung der Folie wurde in Anlehnung an ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20°, 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Siegelnahtfestigkeit bei Kurzzeitsiegelung

Zur Bestimmung wurden zwei 15 mm breite Folienstreifen übereinandergelegt und bei 140 °C, einer Siegelzeit von 0,15 s und einem Siegeldruck von 0,35 N/cm$^2$ (Gerät: Brugger Typ NDS, einseitig beheizte Siegelbacke) versiegelt. Die Siegelnahtfestigkeit wurde nach der T-Peel-Methode bestimmt.

### Reibung

Der Gleitreibungskoeffizient wurde in Anlehnung an DIN 53 375 bestimmt.

### Warmblockwerte

Beim Warmblocktest werden die Abschubkräfte (N) gemessen, die erforderlich sind, um zwei mit Folie eingeschlagene Päckchen, die 2 Stunden einer Temperatur von 70 °C und einem Auflagegewicht von 200 g ausgesetzt waren, zu verschieben oder zu trennen.

### Oberflächenspannung

Die Oberflächenspannung wurde mittels der sogenannten Tintenmethode (DIN 53 364) bestimmt.

### Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

### Bestimmung der Siegelanspringtemperatur

Mit dem Siegelgerät HSG/ET der Fa. Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

### Bestimmung der Wasserdampf- und Sauerstoffdurchlässigkeit

Die Wasserdampfdurchlässigkeit wird gemäß DIN 53 122, Teil 2, bestimmt. Die Bestimmung der Sauerstoff-Barrierewirkung erfolgt gemäß Entwurf DIN 53 380, Teil 3, bei einer Luftfeuchte von 53 %.

## TABELLE

| | Siegelanspringtemperatur (10 N/cm²; 0,5 s) [°C] | | Siegelnahtfestigkeit HSZ (140 °C; 0,35 N/cm²; 0,15 s) [N/15 mm] | | Warmblockwerte [N] | | Gleitreibungskoeffzient | | WDD [g/m²•d] | O₂-D [cm³/m²•d•bar] | Maschinenlaufverhalten auf einer mit 400 Packungen/min laufenden Zigaretteneinschlagmaschine (Typ GD X2) |
|---|---|---|---|---|---|---|---|---|---|---|---|
| | 1. Seite | 2. Seite | 1./1. Seite | 2./2. Seite | 1./1. Seite | 2./2. Seite | 1./1. Seite | 2./2. Seite | | | |
| B1 | 106 | 106 | 2,4 | 2,4 | 4,5 | 4,5 | 0,28 | 0,29 | 0,85 | 1070 | + + |
| B2 | 106 | 106 | 2,3 | 2,5 | 4,9 | 4,7 | 0,27 | 0,26 | 0,84 | 1060 | + + |
| B3 | 104 | 103 | 2,7 | 2,7 | 5,4 | 5,3 | 0,30 | 0,31 | 0,85 | 1090 | + + |
| B4 | 103 | 104 | 2,6 | 2,7 | 5,3 | 5,2 | 0,29 | 0,28 | 0,83 | 1060 | + + |
| B5 | 107 | 106 | 2,3 | 2,3 | 5,4 | 5,7 | 0,30 | 0,30 | 0,86 | 1100 | + + |
| VB1 | 105 | 105 | 2,5 | 2,7 | >15 | >15 | 0,42* | 0,44* | 0,84 | 1060 | Folie verklebt und verblockt teilweise; Zipfelbildung |
| VB2 | 105 | 106 | 2,3 | 2,5 | >12 | >12 | 0,38* | 0,40* | 0,87 | 1090 | wie VB1, nur nicht so stark ausgeprägt |
| VB3 | 109 | 109 | 1,0 | 1,0 | 6 | 7 | 0,32 | 0,33 | 0,84 | 1000 | Siegelnähte sind teilweise undicht |

*Folie verblockt

B = Beispiel; VB = Vergleichsbeispiel

# EP 0 618 070 B1

**Patentansprüche**

1. Orientierte, siegelfähige Polyolefin-Mehrschichtfolie, umfassend eine Basisschicht, die Polypropylen und Harz enthält, und mindestens eine siegelfähige Deckschicht, dadurch gekennzeichnet, daß die siegelfähige Deckschicht

   ein Propylencopolymer und/oder ein Propylenterpolymer und
   ein Antiblockmittel mit einem mittleren Teilchendurchmesser von 3 bis 5 $\mu$m in einer Menge von 0,05 bis 0,4 Gew.-%, bezogen auf die Deckschicht, und
   ein Antiblockmittel mit einem mittleren Teilchendurchmesser von 1 bis 2,5 $\mu$m in einer Menge von 0,05 bis 0,4 Gew.-%, bezogen auf die Deckschicht,

   enthält

2. Polyolefin-Mehrschichtfolie nach Anspruch 1, dadurch gekennzeichnet, daß das Antiblockmittel mit einem mittleren Teilchendurchmesser von 3 bis 5 $\mu$m eine carbonsäurehaltige Beschichtung aufweist.

3. Polyolefin-Mehrschichtfolie nach einem oder mehreren der Ansprüche 1 bis 2, dadurch gekennzeichnet, daß das Antiblockmittel mit einem mittleren Teilchendurchmesser von 3 bis 5 $\mu$m eine citronensäurehaltige Beschichtung aufweist.

4. Polyolefin-Mehrschichtfolie nach einem oder mehreren der Ansprüche 1 bis 3, dadurch gekennzeichnet, daß das Antiblockmittel mit einem mittleren Teilchendurchmesser von 3 bis 5 $\mu$m $SiO_2$ ist und daß das weitere Antiblockmittel mit einem mittleren Teilchendurchmesser von 1 bis 2,5 $\mu$m $SiO_2$ ist.

5. Polyolefin-Mehrschichtfolie nach einem oder mehreren der Ansprüche 1 bis 4, dadurch gekennzeichnet, daß das Harz ein Kohlenwasserstoffharz ist und das Harz einen Erweichungspunkt von $\geq$140 °C hat.

6. Polyolefin-Mehrschichtfolie nach einem oder mehreren der Ansprüche 1 bis 5, dadurch gekennzeichnet, daß das Harz einen Erweichungspunkt von 140 bis 160 °C hat.

7. Polyolefin-Mehrschichtfolie nach einem oder mehreren der Ansprüche 1 bis 6, dadurch gekennzeichnet, daß die siegelfähige Deckschicht eine Siegelanspringtemperatur im Bereich von 100 bis 115 °C aufweist und die Siegelnahtfestigkeit bei 140 °C, 0,35 N/cm$^2$ 0,15 s größer als 1,2 N/1 5 mm ist.

8. Polyolefin-Mehrschichtfolie nach einem oder mehreren der Ansprüche 1 bis 7, dadurch gekennzeichnet, daß die Polyolefin-Mehrschichtfolie eine Wasserdampfdurchlässigkeit von höchstens 1,0 g/m$^2$ · d bezogen auf eine 20 $\mu$m-Folie, hat.

9. Polyolefin-Mehrschichtfolie nach einem oder mehreren der Ansprüche 1 bis 8, dadurch gekennzeichnet, daß die Polyolefin-Mehrschichtfolie eine Wasserdampfdurchlässigkeit von 0,6 bis 0,8 g/m$^2$ · d, bezogen auf eine 20 $\mu$m-Folie, hat.

10. Polyolefin-Mehrschichtfolie nach einem oder mehreren der Ansprüche 1 bis 9, dadurch gekennzeichnet, daß das Propylencopolymer ein Ethylen-Propylen-Copolymer und das Propylenterpolymer ein Ethylen-Propylen-Butylen-Terpolymer ist.

11. Polyolefin-Mehrschichtfolie nach einem oder mehreren der Ansprüche 1 bis 10, dadurch gekennzeichnet, daß die siegelfähige Deckschicht im wesentlichen eine Mischung aus einem Ethylen-Propylen-Copolymeren und einem Ethylen-Propylen-Butylen-Terpolymeren enthält, wobei die Mischung einen Ethylen-Gehalt von 2 bis 5 Gew.-%, einen Butylen-Gehalt von 2 bis 8 Gew.-% und einen Propylen-Gehalt von 85 bis 93 Gew.-%, jeweils bezogen auf die Mischung, aufweist.

12. Polyolefin-Mehrschichtfolie nach einem oder mehreren der Ansprüche 1 bis 11, dadurch gekennzeichnet, daß das Ethylen-Propylen-Copolymer einen Ethylen-Gehalt von 3 bis 5 Gew.-% und das $C_2/C_3/C_4$-Terpolymer einen $C_2$-Gehalt von 2 bis 5 Gew.-%, einen $C_3$-Gehalt von 85 bis 92 Gew.-% und einen $C_4$-Gehalt von 6 bis 10 Gew.-%, bezogen auf das jeweilige Co- bzw. Terpolymer, aufweist.

13. Polyolefin-Mehrschichtfolie nach einem oder mehreren der Ansprüche 1 bis 12, dadurch gekennzeichnet, daß die

**EP 0 618 070 B1**

Mischung aus $C_2/C_3$-Copolymeren und $C_2/C_3/C_4$-Terpolymeren einen Gehalt an Copolymer im Bereich von 20 bis 80 Gew.-% und einen Gehalt an Terpolymer im Bereich von 80 bis 20 Gew.-%, jeweils bezogen auf die Mischung, aufweist.

14. Polyolefin-Mehrschichtfolie nach einem oder mehreren der Ansprüche 1 bis 13, dadurch gekennzeichnet, daß die Mischung aus $C_2/C_3$-Copolymeren und $C_2/C_3/C_4$-Terpolymeren einen Gehalt an Copolymer im Bereich von 30 bis 60 Gew.-%, insbesondere 45 bis 55 Gew.-%, und einen Gehalt an Terpolymer im Bereich von 40 bis 70 Gew.-%, insbesondere 45 bis 55 Gew.-%, jeweils bezogen auf die Mischung, aufweist.

15. Polyolefin-Mehrschichtfolie nach einem oder mehreren der Ansprüche 1 bis 14, dadurch gekennzeichnet, daß die Dicke der siegelfähigen Deckschicht im Bereich von 0,4 bis 2 $\mu$m liegt.

16. Polyolefin-Mehrschichtfolie nach einem oder mehreren der Ansprüche 1 bis 15, dadurch gekennzeichnet, daß die siegelfähige Deckschicht ein Silikonöl in einer Menge von 0,3 bis 3,0 Gew.-% enthält.

17. Polyolefin-Mehrschichtfolie nach einem oder mehreren der Ansprüche 1 bis 16, dadurch gekennzeichnet, daß das Silikonöl ein Polydimethylsiloxan ist, welches eine Viskosität im Bereich von 20 000 bis 3 000 000 mm$^2$/s hat.

18. Polyolefin-Mehrschichtfolie nach einem oder mehreren der Ansprüche 1 bis 17, dadurch gekennzeichnet, daß der Gleitreibungskoeffizient der Folie im Bereich von 0,2 bis 0,35 liegt, und die Folie Warmblockwerte im Bereich von 2 bis 8 N aufweist.

19. Polyolefin-Mehrschichtfolie nach einem oder mehreren der Ansprüche 1 bis 18, dadurch gekennzeichnet, daß die Mehrschichtfolie beidseitig identische Deckschichten aufweist.

20. Verfahren zur Herstellung der Polyolefin-Mehrschichtfolie nach Anspruch 1, bei dem die den einzelnen Schichten der Folie entsprechenden Schmelzen durch eine Flachdüse coextrudiert werden, die coextrudierte Folie über eine Abzugswalze, deren Temperatur zwischen 20 und 110 °C liegt, abgezogen wird, die Folie biaxial gestreckt wird mit einem Längsstreckverhältnis von 4:1 bis 7:1 und einem Querstreckverhältnis von 7:1 bis 11:1, die biaxial gestreckte Folie thermofixiert, gegebenenfalls coronabehandelt und anschließend aufgewickelt wird.

21. Verwendung einer Polyolefin-Mehrschichtfolie nach einem oder mehreren der Ansprüche 1 bis 19 als Verpak-kungsfolie.

22. Verwendung einer Polyolefin-Mehrschichtfolie nach einem oder mehreren der Ansprüche 1 bis 19 als Zigaretteneinschlagfolie.

**Claims**

1. An orientated sealable multi-layer polyolefin film comprising a base layer which contains polypropylene and resin, and at least one sealable top layer, characterised in that the sealable top layer contains

   a propylene copolymer and/or a propylene terpolymer and
   an anti-blocking agent having a mean particle diameter of 3 to 5$\mu$m in a quantity of 0.05 to 0.4% by weight in relation to the top layer and
   an anti-blocking agent having a mean particle size of 1 to 2.5$\mu$m in a quantity of 0.05 to 0.4% by weight in relation to the top layer.

2. A multi-layer polyolefin film according to claim 1, characterised in that the anti-blocking agent which has a mean particle diameter of 3 to 5$\mu$m has a coating containing carboxylic acid.

3. A multi-layer polyolefin film according to one or more of claims 1 to 2, characterised in that the anti-blocking agent which has a mean particle diameter of 3 to 5$\mu$m has a coating containing citric acid.

4. A multi-layer polyolefin film according to one or more of claims 1 to 3, characterised in that the anti-blocking agent which has a mean particle diameter of 3 to 5$\mu$m is $SiO_2$ and in that the further anti-blocking agent which has a mean particle diameter of 1 to 2.5$\mu$m is $SiO_2$.

5. A multi-layer polyolefin film according to one or more of claims 1 to 4, characterised in that the resin is a hydrocarbon resin and the resin has a softening point of $\geq 140°C$.

6. A multi-layer polyolefin film according to one or more of claims 1 to 5, characterised in that the resin has a softening point of 140 to 160°C.

7. A multi-layer polyolefin film according to one or more of claims 1 to 6, characterised in that the sealable top layer has a minimum heat-sealing temperature in the range from 100 to 115°C and the seal-seam strength at 140°C, 0.35 N/sq.cm 0.15s is greater than 1.2N/15 mm.

8. A multi-layer polyolefin film according to one or more of claims 1 to 7, characterised in that the multi-layer polyolefin film has a water vapour permeability of not more than 1.0 g/sq.m · d based on a $20\mu m$ film.

9. A multi-layer polyolefin film according to one or more of claims 1 to 8, characterised in that the multi-layer polyolefin film has a water vapour permeability of 0.6 to 0.8 g//sq.m · d based on a $20\mu m$ film.

10. A multi-layer polyolefin film according to one or more of claims 1 to 9, characterised in that the propylene copolymer is an ethylene propylene copolymer and the propylene terpolymer is an ethylene propylene butylene terpolymer.

11. A multi-layer polyolefin film according to one or more of claims 1 to 10, characterised in that the sealable top layer essentially contains a mixture of an ethylene-propylene copolymer and an ethylene-propylene-butylene terpolymer, the mixture having an ethylene content of 2 to 5% by weight, a butylene content of 2 to 8% by weight and a propylene content of 85 to 93% by weight, respectively based on the mixture.

12. A multi-layer polyolefin film according to one or more of claims 1 to 11, characterised in that the ethylene-propylene copolymer has an ethylene content of 3 to 5% by weight and the $C_2/C_3/C_4$ terpolymer has a $C_2$ content of 2 to 5% by weight, a $C_3$ content of 85 to 92% by weight and a $C_4$ content of 6 to 10% by weight based on the respective co-or terpolymer.

13. A multi-layer polyolefin film according to one or more of claims 1 to 12, characterised in that the mixture of $C_2/C_3$ copolymers and $C_2/C_3/C_4$ terpolymers has a copolymer content in the range from 20 to 80% by weight and a terpolymer content in the range from 80 to 20% by weight, respectively based on the mixture.

14. A multi-layer polyolefin film according to one or more of claims 1 to 13, characterised in that the mixture of $C_2/C_3$ copolymers and $C_2C_3C_4$ terpolymers has a copolymer content in the range from 30 to 60% by weight and in particular 45 to 55% by weight and a terpolymer content in the range from 40 to 70% by weight, particularly 45 to 55% by weight, respectively based on the mixture.

15. A multi-layer polyolefin film according to one or more of claims 1 to 14, characterised in that the thickness of the sealable top layer is in the range from 0.4 to $2\mu m$.

16. A multi-layer polyolefin film according to one or more of claims 1 to 15, characterised in that the sealable top layer contains a silicon oil in a quantity of 0.3 to 3.0% by weight.

17. A multi-layer polyolefin film according to one or more of claims 1 to 16, characterised in that the silicon oil is a polydimethyl siloxane which has a viscosity in the range from 20,000 to 3,000,000 sq.mm/s.

18. A multi-layer polyolefin film according to one or more of claims 1 to 17, characterised in that the sliding friction coefficient of the film is in the range from 0.2 to 0.35, and the film has heat blocking values in the range from 2 to 8 N.

19. A multi-layer polyolefin film according to one or more of claims 1 to 18, characterised in that the multi-layer film has identical top layers on both sides.

20. A method of manufacturing the multi-layer polyolefin film according to claim 1, in which the melts corresponding to the individual layers of the film are coextruded through a flat film die, the coextruded film is pulled off by a take-off roll the temperature of which is between 20 and 110°C, the film is biaxially stretched with a longitudinal stretching ratio of 4:1 to 7:1 and a transverse stretching ratio of 7:1 to 11:1, the biaxially stretched film is heat-set, possibly corona-treated and then rolled up.

**21.** Use of a multi-layer polyolefin film according to one or more of claims 1 to 19 as packaging film.

**22.** Use of a multi-layer polyolefin film according to one or more of claims 1 to 19 as cigarette wrapping film.

**Revendications**

**1.** Feuille multicouche en polyoléfine, orientée, thermosoudable, comprenant une couche de base qui contient du polypropylène et de la résine et au moins une couche de recouvrement thermosoudable, caractérisée en ce que la couche de recouvrement thermosoudable contient

un copolymère de propylène et/ou un terpolymère de propylène et
un agent s'opposant à l'adhérence par contact possédant un diamètre de particules moyen de 3 à 5 $\mu$m en une quantité de 0,05 à 0,4% en poids rapporté à la couche de recouvrement, et
un agent s'opposant à l'adhérence par contact possédant un diamètre de particules moyen de 1 à 2,5 $\mu$m en une quantité de 0,05 à 0,4% en poids rapporté à la couche de recouvrement.

**2.** Feuille multicouche en polyoléfine selon la revendication 1, caractérisée en ce que l'agent s'opposant à l'adhérence par contact, possédant un diamètre de particules moyen de 3 à 5 $\mu$m, présente un revêtement contenant un acide carboxylique.

**3.** Feuille multicouche en polyoléfine selon une ou plusieurs des revendications 1 à 2, caractérisée en ce que l'agent s'opposant à l'adhérence par contact, possédant un diamètre de particules moyen de 3 à 5 $\mu$m, présente un revêtement contenant de l'acide citrique.

**4.** Feuille multicouche en polyoléfine selon une ou plusieurs des revendications 1 à 3, caractérisée en ce que l'agent s'opposant à l'adhérence par contact, possédant un diamètre de particules moyen de 3 à 5 $\mu$m, représente du $SiO_2$ et en ce que l'agent supplémentaire s'opposant à l'adhérence par contact, possédant un diamètre de particules moyen de 1 à 2,5 $\mu$m, représente du $SiO_2$.

**5.** Feuille multicouche en polyoléfine selon une ou plusieurs des revendications 1 à 4, caractérisée en ce que la résine est une résine d'hydrocarbure et la résine possède un point de ramollissement $\geq$ 140°C.

**6.** Feuille multicouche en Polyoléfine selon une ou plusieurs des revendications 1 à 5, caractérisée en ce que la résine possède un point de ramollissement de 140 à 160°C.

**7.** Feuille multicouche en polyoléfine selon une ou plusieurs des revendications 1 à 6, caractérisée en ce que la couche de recouvrement thermosoudable présente une température de déclenchement du thermosoudage dans le domaine de 100 à 115°C, la résistance des joints obtenus par thermosoudage à 140°C sous une pression de 0,35 N/cm$^2$ et pendant 0,15 seconde est supérieure à 1,2 N/15 nm.

**8.** Feuille multicouche en polyoléfine selon une ou plusieurs des revendications 1 à 7, caractérisée en ce que la feuille multicouche en polyoléfine possède une perméabilité à la vapeur d'eau maximale de 1,0 g/m$^2$.d rapportée à une feuille de 20 $\mu$m.

**9.** Feuille multicouche en polyoléfine selon une ou plusieurs des revendications 1 à 8, caractérisée en ce que la feuille multicouche en polyoléfine possède une perméabilité à la vapeur d'eau de 0,6 à 0,8 g/m$^2$.d rapportée à une feuille de 20 $\mu$m.

**10.** Feuille multicouche en polyoléfine selon une ou plusieurs des revendications 1 à 9, caractérisée en ce que le copolymère de propylène est un copolymère d'éthylène-propylène et le terpolymère de propylène est un terpolymère d'éthylène-propylène-butylène.

**11.** Feuille multicouche en polyoléfine selon une ou plusieurs des revendications 1 à 10, caractérisée en ce que la couche de recouvrement thermosoudable contient essentiellement un mélange d'un copolymère d'éthylène-propylène et d'un terpolymère d'éthylène-propylène-butylène, le mélange présentant une teneur en éthylène s'élevant à 2-5% en poids, une teneur en butylène s'élevant a 2-8% en poids et une teneur en propylène s'élevant à 85-93% en poids chaque fois rapportés au mélange.

**12.** Feuille multicouche en polyoléfine selon une ou plusieurs des revendications 1 à 11, caractérisée en ce que le copolymère d'éthylène-propylène présente une teneur en éthylène s'élevant à 3-5% en poids et le terpolymère en $C_2/C_3/C_4$ présente une teneur en $C_2$ s'élevant à 2-5% en poids, une teneur en $C_3$ s'élevant à 85-92% en poids et une teneur en $C_4$ s'élevant à 6-10% en poids rapportés au copolymère, respectivement au terpolymère respectif.

**13.** Feuille multicouche en polyoléfine selon une ou plusieurs des revendications 1 à 12, caractérisée en ce que le mélange de copolymères en $C_2/C_3$ et des terpolymère en $C_2/C_3/C_4$ présente une teneur en copolymère dans le domaine de 20 à 80% en poids et une teneur en terpolymère dans le domaine de 80 à 20% en poids chaque fois rapportés au mélange.

**14.** Feuille multicouche en polyoléfine selon une ou plusieurs des revendications 1 à 13, caractérisée en ce que le mélange de copolymères en $C_2/C_3$ et des terpolymère en $C_2/C_3/C_4$ présente une teneur en copolymère dans le domaine de 3 à 60% en poids, en particulier de 45 à 55% en poids, et une teneur en terpolymère dans le domaine de 40 à 70% en poids, en particulier de 45 à 55% en poids chaque fois rapportés au mélange.

**15.** Feuille multicouche en polyoléfine selon une ou plusieurs des revendications 1 à 14, caractérisée en ce que l'épaisseur de la couche de recouvrement thermosoudable se situe dans le domaine de 0,4 à 2 $\mu$m.

**16.** Feuille multicouche en polyoléfine selon une ou plusieurs des revendications 1 à 15, caractérisée en ce que la couche de recouvrement thermosoudable contient une huile de silicone en une quantité de 0,3 à 3,0% en poids.

**17.** Feuille multicouche en polyoléfine selon une ou plusieurs des revendications 1 à 16, caractérisée en ce que l'huile de silicone est un polydiméthylsiloxane qui possède une viscosité dans le domaine de 20.000 à 3.000.000 mm$^2$/s.

**18.** Feuille multicouche en polyoléfine selon une ou plusieurs des revendications 1 à 17, caractérisée en ce que le coefficient de friction de glissement de la feuille se situe dans le domaine de 0,2 à 0,35 et la feuille présente des valeurs de résistance contre l'adhérence par contact à chaud dans le domaine de 2 à 8 N.

**19.** Feuille multicouche en polyoléfine selon une ou plusieurs des revendications 1 à 18, caractérisée en ce que la feuille multicouche présente des couches de recouvrement identiques sur les deux faces.

**20.** Procédé pour la préparation de la feuille multicouche en polyoléfine selon la revendication 1, dans lequel on soumet les masses fondues correspondant aux couches individuelles de la feuille à une coextrusion à travers une filière pour feuilles, on tire la feuille coextrudée par-dessus un cylindre de traction dont la température se situe entre 20 et 110°C, on soumet la feuille à un étirage biaxe avec un rapport d'étirage en direction longitudinale de 4:1 à 7:1 et avec un rapport d'étirage en direction transversale de 7:1 à 11:1, on soumet à un thermofixage la feuille qui a été soumise à un étirage biaxe, on la soumet le cas échéant à un traitement par effluves négatives et ensuite, on l'enroule.

**21.** Utilisation d'une feuille multicouche en polyoléfine selon une ou plusieurs des revendications 1 à 19 à titre de feuille d'emballage.

**22.** Utilisation d'une feuille multicouche en polyoléfine selon une ou plusieurs des revendications 1 à 19 à titre de feuille d'emballage pour des cigarettes.